# EUROPÄISCHE PATENTSCHRIFT

(11) **EP 0 412 266 B1**
(45) Veröffentlichungstag und Bekanntmachung des Hinweises auf die Patenterteilung: **01.09.1993**
(21) Anmeldenummer: 90111927.1
(22) Anmeldetag: 23.06.1990
(51) Int. Cl.: G01F 23/32

(54) **Füllstandssensor für Kraftstoffbehälter**
Liquid level sensor for fuel containers
Dispositif de jauge pour des réservoirs de carburant

(30) Priorität: 11.08.1989 DE 3926552
(43) Veröffentlichungstag der Anmeldung: 13.02.1991
(73) Patentinhaber: Bayerische Motoren Werke Aktiengesellschaft, 80788 München (DE)
(72) Erfinder: Kroiss, Hugo, D-8038 Gröbenzell (DE); Tuschl, Günther, D-8208 Kolbermoor (DE)

(56) Entgegenhaltungen:
- DE-A- 1 938 119
- DE-A- 2 107 823
- DE-A- 3 307 288
- FR-A- 2 571 703
- PATENT ABSTRACTS OF JAPAN vol. 9, no. 44 (P-337)(1767) 23 Februar 1985, & JP-A-59 183334

## Beschreibung

Die Erfindung betrifft einen Füllstandssensor für Kraftstoffbehälter, insbesondere von Kraftfahrzeugen, gemäß dem Oberbegriff des Anspruchs 1.

Aus der DE-A- 19 38 119 ist bereits ein Füllstandssensor für Kraftstoffbehälter von Kraftfahrzeugen bekannt, bei dem die Messung und Anzeige des Füllstandsniveaus über einen Winkelgeber erfolgt. Die mit jeweils einem Schwimmer versehenen Hebelarme des Winkelgebers sind an einem Gehäuse gelagert, das über einen Flansch mit der Wand des Kraftstoffbehälters verbunden ist. Dies hat den Nachteil, daß bei einer Lageänderung des Gehäuses bei einer Verformung des Kraftstoffbehälters die am Gehäuse ausgebildete Lagerungsachse der Hebelarme verschwenkt wird. Aufgrund der Länge der verwendeten Hebelarme führt auch eine geringe Änderung der Achsenlage zu beträchtlichen Meßfehlern.

Aufgabe der Erfindung ist es, einen Füllstandssensor zu schaffen, bei dem Winkelabweichungen von der Sollage des Flansches zum Befestigen des Füllstandssensors am Kraftstoffbehälter nicht auf die Meßgenauigkeit des Füllstandssensors wirken.

Diese Aufgabe wird erfindungsgemäß durch einem Füllstandssensor mit den Merkmalen des Anspruchs 1 gelöst. Weitere Ausführungsformen sind in dem Abhängigen Ansprüchen 2 bis 11 gegeben.

Durch den erfindungsgemäßen Aufbau des Füllstandssensors ist eine schnelle und lagerichtige Montage im Kraftstoffbehälter möglich. Durch die Ausbildung des Füllstandssensors als eine kompakte Baueinheit ergibt sich eine einfache Transportier- und Lagerbarkeit. Durch eine Zentrierung der Bodenabstützung des Füllstandssensors am Kraftstoffbehälterboden und eine Los- oder Schwenklagerung des Füllstandssensors am Befestigungs- oder Tankflansch wird eine definierte Lage des Füllstandssensors zum Kraftstoffbehälter gewährleistet, die auch bei Verformungen des Kraftstoffbehälters beibehalten wird. Durch den erfindungsgemäßen Füllstandssensor wird eine wesentliche Genauigkeitserhöhung der Meßergebnisse vor allem bei einer Verwendung eines Kunstoff-Kraftstoffbehälters erreicht.

Ausführungsformen der Erfindung werden nachstehend anhand der Zeichnungen beispielshalber beschrieben. Dabei zeigen:
- Fig. 1: eine teilweise geschnittene Seitenansicht eines an einem Tankflansch angeordneten Füllstandssensors im Transportzustand,
- Fig. 2: eine teilweise geschnittene Seitenansicht des in Fig. 1 gezeigten Füllstandssensors in seiner Einbaulage in einem unverformten Kraftstoffbehälter und
- Fig. 3: eine teilweise geschnittene Seitenansicht des in der Fig. 2 gezeigten Füllstandssensors in einem verformten Kraftstoffbehälter.

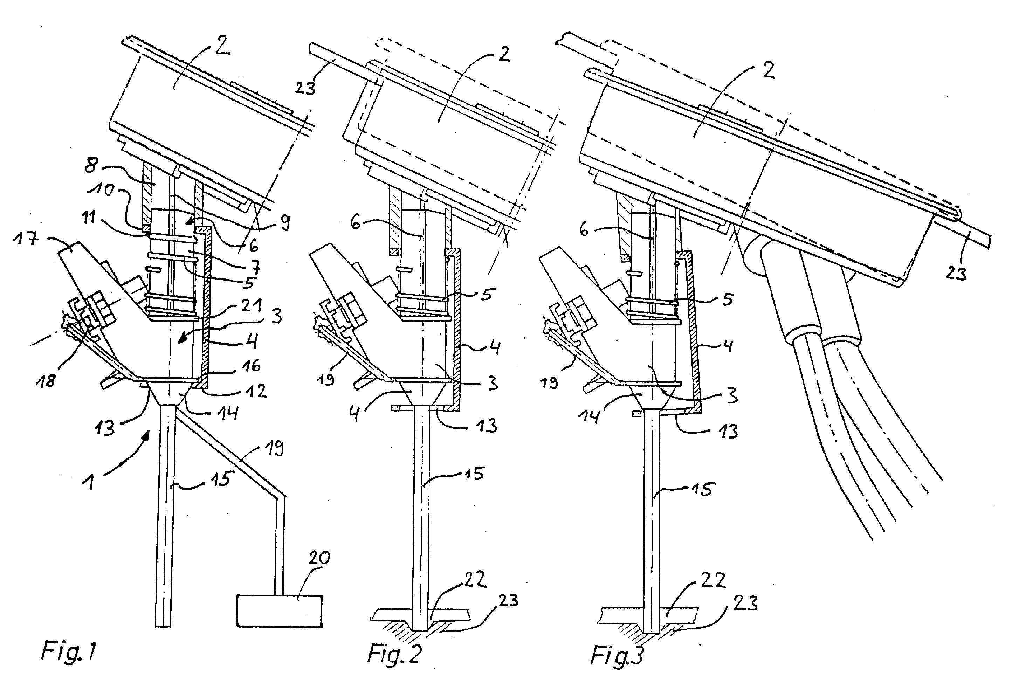

In der Fig. 1 ist ein an einem Tankflansch 2 befestigter Füllstandssensor 1 dargestellt. Der Füllstandssensor 1 besteht im wesentlichen aus drei Bauteilen, nämlich einer Gebereinheit 3, einem die Gebereinheit 3 teilweise umgebendes Gehäuse 4 und einer die Gebereinheit 3 gegen das Gehäuse 4 verspannende Druckfeder 5. Die Gebereinheit 3 weist an ihrem oberen Ende eine Führung 6 auf, die kreuzförmig ausgebildet ist. Die die Führung 6 bildenden, im rechten Winkel sich kreuzenden Stege 7 greifen bereits im Transportzustand in eine im Tankflansch 2 entsprechend geformte Gegenführung 8 ein. Durch die in den Nuten 9 der Gegenführung 8 geführten Stege 7 ergibt sich eine genaue Zuordnung des über nicht abgebildete Haken am Tankflansch befestigten Gehäuses 4. Zur besseren Montage ist das Gehäuse 4 an zwei aufeinanderstoßenden Seiten offen. In seiner oberen Stirnfläche 10 sind entsprechend der Führung 6 Aussparungen 11 ausgebildet, in denen die Stege 7 mit Spiel geführt sind. An der unteren Stirnseite 12 ist eine kreisrunde Öffnung 13 ausgebildet, in der die Gebereinheit 3 über einen Konus 14 im Transportzustand bzw. eine rohrförmige Bodenabstützung 15 im eingebauten Zustand geführt ist. Die Gebereinheit 3 weist oberhalb des Konus 14 einen rechteckförmigen Anschlag oder Absatz 16 auf, der sich im Transportzustand auf der Stirnseite 12 des Gehäuses 4 abstützt. An der Gebereinheit 3 ist ferner einstückig ein unter einem Winkel zur Längsachse der Führung 6 verlaufender, nach oben sich erstreckender Arm 17 angeformt. An diesem Arm 17 ist die Schwenkachse bzw. das Schwenklager 18 für mindestens einen Winkelgeberarm 19 ausgebildet, an dessen zum Schwenklager 18 abgewandten Ende ein Schwimmer 20 angeordnet ist. An der Rückseite des Armes 17 ist ein Dickschichtwiderstand befestigt, der mit einem am Winkelgeberarm 19 befestigten Fühler in Verbindung steht, wobei der Fühler aus einem stromleitfähigen Metall besteht. Bei einem Winkelausschlag ändert sich der über den Fühler abgegriffene Widerstand, wobei das am Dickschichtwiderstand abgegriffene Signal zur Anzeige des Füllstandsniveaus dient. Das Schwenklager 18 ist im wesentlichen ein rohrförmiger, in der Mitte durch einen Spalt geteilter, am Arm 17 angeformter Seitenarm. In der Durchgangsöffnung des Schwenklagers 18 ist das obere Ende des Winkelgeberarms 19 gelagert. Um zu verhindern, daß sich das obere Ende des Winkelgeberarms 19 seitlich aus der Durchgangsöffnung herausbewegt, ist am Winkelgeberarm ein L-förmiges Halterungselement angeordnet. Am langen Arm des Halterungselementes sind an den jeweils gegenüberliegenden Enden zwei Halterungsklemmen einstückig ausgebildet, die den Winkelgeberarm 19 fest umklammern. Am Ende des kurzen Armes des Halterungselementes ist einstückig eine Buchse angeformt, die in den Spalt des Schwenklagers 18 eingreift und in der das abgewinkelte obere Ende des Winkelgeberarms 19 ebenfalls geführt ist. An der Verbindungsstelle zwischen dem Arm 17 und dem unteren Ende der Führung 6 ist an der Gebereinheit 3 ein Absatz oder Anschlag 21 als Wegbegrenzung für die auf der Führung 6 angeordneten Feder 5 ausgebildet. Die Feder 5 liegt an ihrem unteren Ende am Absatz 21 an und stützt sich mit ihrem oberen Ende an der Innenfläche der Stirnseite 10 des Gehäuses 4 ab. Durch die Feder 5 ist die Gebereinheit 3 gegenüber dem Gehäuse 4 fest verspannt.

In der Fig. 2 ist die Einbaulage des Füllstandssensors 1 gezeigt. Das untere Ende der Bodenabstützung 15 ist in einer im Boden des Kraftstoffbehälters 23 ausgebildeten Zentrierung 22 in der horizontalen Ebene in einer festgelegten Lage gehaltert. Beim Einbauen des Füllstandssensors 1 rastet somit zunächst das untere Ende der Bodenabstützung 15 in die Zentrierung 22 ein. Bei der Befestigung des Tankflansches 2 an einer geeigneten, am Kraftstoffbehälter 23 ausgebildeten Halterung drückt die dem Gehäuse 4 zugewandte Stirnseite der Gegenführung 8 auf das Gehäuse 4, wodurch das Gehäuse 4 in Richtung des Bodens des Kraftstoffbehälters verschoben wird.

Wie aus der Fig. 3 hervorgeht, ist das Gehäuse 4 um die Aussparungen 11 für die Führung 6 schwenkbar, wobei sich der Schwenkwinkel aus der Geometrie des Konus 14 bzw. dem Durchmesser der Bodenabstützung 15 und dem Durchmesser der an der Stirnseite 12 ausgebildeten Öffnung 13 ergibt. In der vorliegenden Ausführungsform ergibt sich aufgrund der geometrischen Verhältnisse einen Gesamtschwenkwinkel von ca. 10°. Innerhalb dieses Winkelbereiches können Verformungen des Kraftstoffbehälters 23 bzw. des daran angeordneten Flansches 2 ausgeglichen werden. Darüber hinaus können auch Winkelabweichungen des Flansches 2 durch Herstellungstoleranzen kompensiert werden.

## Patentansprüche

1. Füllstandssensor für Kraftstoffbehälter, insbesondere für Kraftfahrzeuge, der über einen Tankflansch (2) mit dem Kraftstoffbehälter (23) verbunden ist, und der eine Gebereinheit (3) mit mindestens einem um ein Schwenklager (18) drehbeweglichen Winkelgeberarm (19) aufweist, dadurch gekennzeichnet, daß die Gebereinheit (3) des Füllstandssensors (1) lagefest zwischen dem Tankflansch (2) und dem Kraftstoffbehälterboden angeordnet ist, wobei die Lagerung der Gebereinheit (3) an ihrem oberen Ende über ein die Gebereinheit (3) umgebendes und mit dieser in Verbindung stehendes Gehäuse (4) erfolgt, das mit dem Tankflansch (2) verbunden ist und das um das obere Ende der Gebereinheit schwenkbar ist und wobei die Gebereinheit (3) an ihrem unteren Ende über eine am Kraftstoffbehälterboden zentrierte Bodenabstützung (15) gelagert ist.

2. Füllstandssensor nach Anspruch 1, dadurch gekennzeichnet, daß das Gehäuse (4) über Führungen (6, 11; 15, 14, 13) und einer zwischen dem Gehäuse (4) und der Gebereinheit (3) eingespannten Feder (5) mit der Gebereinheit (3) eine Baueinheit bildet und daß das Gehäuse (4) an der Gebereinheit (3) längsverschiebbar geführt ist.

3. Füllstandssensor nach den Ansprüchen 1 oder 2, dadurch gekennzeichnet, daß die Gebereinheit (3) an ihrem oberen Ende eine Längsführung (6) aufweist, die in entsprechend geformten Aussparungen (11) des Gehäuses (4) mit einem eine Schwenkbewegung der Stirnseite (10) des Gehäuses (4) zulassenden Spiel in Eingriff steht und
daß die Gebereinheit (3) einen sich nach oben erstreckenden, unter einem Winkel zur Längsachse der Führung (6) verlaufenden Arm (17) aufweist, an dem ein Schwenklager (18) für mindestens einen darin gehalterten Winkelgeberarm (19) ausgebildet ist und
daß am unteren Ende der Gebereinheit (3) ein Absatz (16) angeformt ist, der an der Innenfläche der unteren Stirnseite (12) des Gehäuses (4) aufliegt, wobei sich an den Absatz (16) ein sich nach unten verjüngender Konus (14) anschließt, wobei der maximale Durchmesser des Konus (14) mit dem Durchmesser einer in der Stirnseite (12) des Gehäuses (4) ausgebildeten Öffnung (13) übereinstimmt und wobei der minimale Durchmesser des Konus (14) größer oder gleich einer sich daran anschließenden rohrförmigen Bodenabstützung (15) ist.

4. Füllstandssensor nach einem oder mehreren der vorhergehenden Ansprüchen, dadurch gekennzeichnet, daß am Arm (17) der Gebereinheit (3) eine Meßeinrichtung angeordnet ist, die entsprechend dem Winkelausschlag des Winkelgeberarmes (19) die Füllstandshöhe des Kraftstoffbehälters (23) mißt.

5. Füllstandssensor nach einem oder mehreren der vorhergehenden Ansprüche, dadurch gekennzeichnet, daß die Gebereinheit (3) am unteren Ende der Führung (6) einen Absatz (21) aufweist, an dem sich die Feder (5) mit ihrem unteren Ende abstützt.

6. Füllstandssensor nach einem oder mehreren der vorhergehenden Ansprüche, dadurch gekennzeichnet, daß die Feder (5) mit ihrem oberen Ende an der Innenfläche der Stirnseite (10) des Gehäuses (4) anliegt.

7. Füllstandssensor nach einem oder mehreren der vorhergehenden Ansprüche, dadurch gekennzeichnet, daß die Gebereinheit (3) in bezug auf den Arm (17), die Führung (6) und den Konus (14) aus einem Hart-Kunststoff besteht, daß die Bodenabstützung (15) aus einem Leichtmetall ist und daß das Gehäuses (4) ebenfalls aus einem Hart-Kunststoff besteht.

8. Füllstandssensor nach einem oder mehreren der vorhergehenden Ansprüche, dadurch gekennzeichnet, daß im Tankflansch (2) eine Gegenführung (8) ausgebildet ist, in der die Führung (6) der Gebereinheit (3) eingreift.

9. Füllstandssensor nach einem oder mehreren der vorhergehenden Ansprüche, dadurch gekennzeichnet, daß die Führung (6) bereits im Transportzustand in die Gegenführung (8) des Tankflansches (2) eingreift.

10. Füllstandssensor nach einem oder mehreren der vorhergehenden Ansprüche, dadurch gekennzeichnet, daß das Gehäuse (4) an der Stirnseite der Gegenführungen (8) anliegt.

11. Füllstandssensor nach einem oder mehreren der vorhergehenden Ansprüche, dadurch gekennzeichnet, daß das Gehäuse (4) an mindestens einer Seite offen ist und daß das Gehäuse (4) an mindestens einer seiner Rückseiten Halterungseinrichtungen aufweist, mit denen das Gehäuse (4) mit dem Tankflansch verbunden ist.

## Claims

1. A filling level sensor for fuel containers, especially for motor vehicles, which is connected via a tank flange (2) with the fuel container (23) and which has an indicator unit (3) with at least one angle indicator arm (19) rotatably movable about a swivel bearing (18), characterised in that the indicator unit (3) of the filling level sensor (1) is arranged so as to be fixed in position between the tank flange (2) and the fuel container base, and the mounting of the indicator unit (3) at its upper end takes place by means of a housing (4) surrounding the indicator unit (3) and communicating therewith, which housing (4) is connected with the tank flange (2) and is swingable about the upper end of the indicator unit, and in which the indicator unit (3) is mounted at its lower end by means of a base support (15) which is centered on the fuel container base.

2. A filling level sensor according to Claim 1, characterised in that the housing (4) is guided via guides (6,11; 15, 14, 13) and a spring (5) fixed betwen the housing (4) and the indicator unit (3) forms a structural unit with the indicator unit (3), and that the housing (4) is guided so as to be longitudinally displaceable on the indicator unit (3).

3. A filling level sensor according to Claim 1 or 2, characterised in that the indicator unit (3) has a longitudinal guide (6) at its upper end which is in engagement in correspondingly-shaped recesses (11) of the housing (4) with play permitting a swivel movement of the end face (10) of the housing (4), and
that the indicator unit (3) has an arm (17) projecting upwards and extending at an angle to the longitudinal axis of the guide (6), on which arm a swivel bearing (18) is formed for at least one angle indicator arm (19) mounted therein, and
that, at the lower end of the indicator unit (3), a shoulder (16) is formed which rests on the inner face of the lower end face (12) of the housing (4), and a taper (14), narrowing downwards, joins on to the shoulder (16), wherein the maximum diameter of the taper (14) coincides with the diameter of an opening (13) formed in the end face (12) of the housing (4) and wherein the minimum diameter of the taper (14) is greater than, or equal to, a tubular base support (15) adjoining thereto.

4. A filling level sensor according to one or more of the preceding claims, characterised in that, on the arm (17) of the indicator unit (3), a measurement device is arranged which, according to the angular deflection of the angle indicator arm (19), measures the filling level height of the fuel container (23).

5. A filling level sensor according to one or more of the preceding claims, characterised in that the indicator unit (3) has, at the lower end of the guide (6), a shoulder (21) against which the spring (5) rests at its lower end.

6. A filling level sensor according to one or more of the preceding claims, characterised in that the spring (5) lies with its upper end against the inner surface of the end face (10) of the housing (4).

7. A filling level sensor according to one or more of the preceding claims, characterised in that the indicator unit (3), in relation to the arm (17), the guide (6) and the taper (14), is made of a hard plastics material, the base support (15) is made of a light metal, and the housing (4) is made of a hard plastics material.

8. A filling level sensor according to one or more of the preceding claims, characterised in that a counter guide (8) is formed in the tank flange (2), in which guide (8) the guide (6) of the indicator unit (3) engages.

9. A filling level sensor according to one or more of the preceding claims, characterised in that the guide (6) already engages into the counter guide (8) of the tank flange (2) in the transportation state.

10. A filling level sensor according to one or more of the preceding claims, characterised in that the housing (4) lies against the end face of the counter guides (8).

11. A filling level sensor according to one or more of the preceding claims, characterised in that the housing (4) is open on at least one side and that the housing (4) has, on at least one of its rear sides, mounting devices with which the housing (4) is connected to the tank flange.

## Revendications

1. Dispositif de jauge pour réservoir de carburant, en particulier pour véhicules à moteur qui est relié par un flanc de réservoir (2) au réservoir de carburant (23) et qui présente une unité de détection (3) avec au moins un bras de détecteur d'angle (19) tournant autour d'un palier pivotant (18), dispositif de jauge caractérisé en ce que l'unité de détection (3) du dispositif de jauge (1) est disposée à poste fixe entre le flanc de réservoir (2) et le fond du réservoir de carburant, le montage de l'unité de détection (3) sur son extrémité supérieure ayant lieu au moyen d'un boîtier entourant l'unité de détection (3) et se trouvant en liaison avec celle-ci, boîtier qui est relié au flanc de réservoir (2) et qui peut pivoter autour de l'extrémité supérieure de l'unité de détection et l'unité de détection (3) est montée sur son extrémité inférieure au moyen d'un appui sur le fond (15) centré sur le fond du réservoir de carburant.

2. Dispositif de jauge selon la revendication 1, caractérisé en ce que le boîtier (4) forme avec l'unité de détection (3) une unité de construction au moyen de guidages (6, 11 ; 15, 14, 13) et d'un ressort (5) serré entre le boîtier (4) et l'unité de détection (3) et en ce que le boîtier (4) peut coulisser longitudinalement sur l'unité de détection (3).

3. Dispositif de jauge selon les revendications 1 ou 2, caractérisé en ce que l'unité de détection (3) présente sur son extrémité supérieure un guidage longitudinal (6) qui vient en prise dans des évidements formés de façon correspondante (11) du boîtier (4) avec un jeu permettant un mouvement de pivotement de la face frontale (10) du boîtier (4) et en ce que l'unité de détection (3) présente un bras (17), qui s'étend vers le haut en se déployant sous un certain angle par rapport à l'axe longitudinal du guidage (6), bras sur lequel est formé un palier pivotant (18) pour au moins un bras de détecteur d'angle (19) fixé dedans et en ce qu'à l'extrémité inférieure de l'unité de détection (3), il est formé un appendice (16), qui repose sur la surface interne de la face frontale (12) du boîtier (4), tandis qu'un cône, qui va en se rétrécissant vers le bas, se raccorde à l'appendice (16), le diamètre maximal du cône (14) coïncidant avec le diamètre d'une ouverture (13) formée dans la face frontale (12) du boîtier (4) et le diamètre minimal du cône (14) étant plus grand ou égal à un appui sur le fond (15) de forme tubulaire s'y raccordant.

4. Dispositif de jauge selon une ou plusieurs des revendications précédentes, caractérisé en ce que sur le bras (17) de l'unité de détection (3) est disposé un dispositif de mesure, qui mesure la hauteur du remplissage du réservoir de carburant (23) en fonction de la déviation angulaire du bras du détecteur d'angle (19).

5. Dispositif de jauge selon une ou plusieurs des revendications précédentes, caractérisé en ce que l'unité de détection (3) présente à l'extrémité inférieure du guidage (6) un appendice (21) sur lequel s'appuie le ressort (5) par son extrémité inférieure.

6. Dispositif de jauge selon une ou plusieurs des revendications précédentes, caractérisé en ce que le ressort (5) repose par son extrémité supérieure sur la face intérieure de la face frontale (10) du boîtier (4).

7. Dispositif de jauge selon une ou plusieurs des revendications précédentes, caractérisé en ce que l'unité de détection (3) en ce qui concerne le bras (17), le guidage (6) et le cône (14) est en une matière plastique dure, en ce que l'appui sur le fond (15) est en un métal léger et en ce que le boîtier (4) est également en une matières plastique dure.

8. Dispositif de jauge selon une ou plusieurs des revendications précédentes, caractérisé en ce que dans le flanc de réservoir (2), est formé un contre-guidage (8), dans lequel vient en prise le guidage (6) de l'unité de détection (3).

9. Dispositif de jauge selon une ou plusieurs des revendications précédentes, caractérisé en ce que le guidage (6) vient déjà en prise en état de transport dans le contre-guidage (8) du flanc de réservoir (2).

10. Dispositif de jauge selon une ou plusieurs des revendications précédentes, caractérisé en ce que le boîtier (4) repose sur la face frontale des contre-guidages (8).

11. Dispositif de jauge selon une ou plusieurs des revendications précédentes, caractérisé en ce que le boîtier (4) est ouvert sur au moins un côté, et en ce que le boîtier (4) présente sur au moins l'une de ses faces arrière des dispositifs de fixation, avec lesquels le boîtier (4) est relié au flanc de réservoir.
